# EUROPÄISCHE PATENTANMELDUNG

(11) **EP 0 684 345 A1**
(43) Veröffentlichungstag der Anmeldung: **29.11.1995**
(21) Anmeldenummer: 95107882.3
(22) Anmeldetag: 24.05.1995
(51) Int. Cl.: E02D 31/00

(54) **Deponieabdichtung und Verfahren zur Herstellung derselben**

(30) Priorität: 26.05.1994 DE 4418411
(71) Anmelder: Fischer, Erhard, D-53797 Lohmar (DE)
(72) Erfinder: Fischer, Erhard, D-53797 Lohmar (DE)
(74) Vertreter: Werner, Hans-Karsten, Dr.Dipl.-Chem.

(57) **Zusammenfassung**

Die Deponieabdichtung besteht aus mindestens zwei Schichten Ton und mindestens einer eingelagerten Folie, wobei die Tonschichten aus fein aufgeschlossenen, gegebenenfalls mit anderen Tonarten oder Klärschlammverbrennungsasche verschnittenen, lagenweise eingebauten, mechanisch verdichteten, an den Seitenflächen mitaneinander verklebten Steinen bestehen. Die Herstellung erfolgt dadurch, daß der fein aufgeschlossene, gegebenenfalls mit anderen Tonarten oder Klärschlammverbrennungsasche verschnittene, zu Steinen verpresste, lagenweise eingebaute Ton mechanisch so verdichtet wird, daß die aneinander angrenzenden Seitenflächen der Steine miteinander verkleben, wobei jeweils eine oder mehrere Lagen der Steine auf die miteinander verklebte Oberfläche der Folie verlegt werden, woraufhin mindestens eine weitere Lage der Steine verlegt und verdichtet wird.

## Beschreibung

Gegenstand der vorliegenden Erfindung ist eine Deponieabdichtung bestehend aus mindestens zwei Schichten Ton und mindestens einer eingelagerten Folie sowie ein Verfahren zur Herstellung derselben.

Deponieabdichtungen bestehend aus mindestens zwei Schichten Ton und mindestens einer eingelagerten Folie wurden bisher hergestellt aus geschnitzeltem Ton, welcher möglichst gleichmäßig aufgetragen und verdichtet wurde, wobei mindestens eine Folie eingelagert wurde. Zusätzlich wurde häufig zur Stabilisierung ein Kunststoffvlies mit eingebaut (Geotextil).

Nachteile dieser Deponieabdichtung sind der aufwendige Einbau und die Abhängigkeit von der Witterung. Beispielsweise führt Regen zu einer unerwünschten Verschlammung und späten Befahrbarkeit, während hohe Temperaturen und direkte Sonneneinstrahlung zu einem unerwünschten vorzeitigen Austrocknen der Oberflächen der Tonschnitzel führen, wodurch die Verdichtung und damit auch die Abdichtung erschwert werden.

Beim herkömmlichen Bau einer Deponieabdichtung ist weiterhin darauf zu achten, daß die vorgeschriebenen Mindestdicken der Tonschicht eingehalten werden. Besondere Schwierigkeiten bereitete stets der Aufbau der Tonschichten und der Einbau der Folie an den Seitenwänden der Deponie.

Ein weiterer Nachteil der herkömmlichen Bauweise war die Abhängigkeit von der jeweils zur Verfügung stehenden Tonqualität, so daß aus Sicherheitsgründen die Tonschichten stets dicker sein mußten als eigentlich zur Abdichtung der Deponie erforderlich wäre.

Die Erfindung hat sich die Aufgabe gestellt, die bekannte Deponieabdichtung der eingangs genannten Art und das Verfahren zur Herstellung von Deponieabdichtungen zu vereinfachen und zu verbessern, wobei nach Möglichkeit Material eingespart werden soll und die Sicherheit der Abdichtung dennoch erhöht werden sollte. Schließlich sollte der Einbau unabhängig werden von der Witterung und der Aufbau der Abdichtung an den Seitenwänden vereinfacht werden. Schließlich hat sich die Erfindung die Aufgabe gestellt, die Zusammensetzung der Tonschicht zu optimieren und gegebenenfalls sogar Materialien mit einzubauen, die aufgrund ihrer chemischen Zusammensetzung gut geeignet wären, die Qualität des Tones zu erhöhen und zu verbessern.

Diese Aufgabe konnte jetzt überraschend gut und einfach dadurch gelöst werden, daß der Ton nicht nur geschnitzelt, sondern fein aufgeschlossen, gegebenenfalls mit anderen Tonarten oder Klärschlammverbrennungsasche verschnitten, zu Steinen verpresst, lagenweise eingebaut, mechanisch so verdichtet wird, daß die aneinander angrenzenden Seitenflächen der Steine miteinander verkleben, wobei nach jeweils einer oder mehreren Lagen der Steine auf die geglättete und miteinander verklebte Oberfläche die Folie verlegt wird, woraufhin mindestens eine weitere Lage der Steine verlegt und verdichtet wird.

Dadurch, daß der Ton fein aufgeschlossen wird, ist es ohne weiteres möglich, ihn mit anderen Tonarten zu verschneiden. Darüber hinaus ist es auch möglich, ihn mit Klärschlammverbrennungsasche zu verschneiden, die aufgrund ihres hohen Gehaltes an Aluminiumoxid zu einer Verbesserung der Tonqualität führen kann. Es ist daher sogar möglich, die Steine aus einem Gemisch von nur noch 20 % Ton und 80 % Klärschlammverbrennungsasche herzustellen. Besonders bevorzugt sind Mischungsverhältnisse von Ton und Klärschlammverbrennungsasche im Bereich 40 : 60 bis 60 : 40.

Der Wassergehalt des Tons wird so gewählt, daß er steif aber mechanisch verformbar ist. Wassergehalte von ca. 18 % ergeben optimale Ergebnisse. Dies erfordert die Herstellung der Formkörper im Steifverpressungsverfahren.

Das Verpressen des Tons zu Steinen erfolgt vorzugsweise in üblichen Strangpressen, wie sie für die Herstellung von Schamottesteinen oder Ziegelsteinen zur Anwendung kommen. Die Steine weisen daher vorzugsweise Abmessungen von 30 x 15 x 15 cm oder 24 x 11,5 x 11,5 cm auf. Selbstverständlich ist es aber möglich, auch andere Dimensionen für die Steine zu wählen.

Um eine leichte und einwandfreie Verklebung der Steine bei der mechanischen Verdichtung zu erzielen, werden vorzugsweise die Seitenflächen der Steine aufgerauht. Prinzipiell ist es natürlich möglich, die Seitenflächen abwechselnd konkav oder konvex zu gestalten. Dies kann aber relativ leicht zu Einbaufehlern führen, die die Sicherheit der Deponieabdichtung gefährden.

Die fertig gepressten Steine werden vorzugsweise auf Paletten zwischengelagert, um durch eine Schrumpffolie vor Austrockung und externer Befeuchtung geschützt zu werden.

Die Verlegung erfolgt dann vorzugsweise von den Paletten aus durch übliche Pflasterverlegemaschinen. Dies ermöglicht die rasche, preiswerte und sichere Verlegung der Steine. Die anschließende mechanische Verdichtung kann mit üblichen Maschinen durch Gewicht und/oder Rütteln erfolgen. Es entstehen so auch glatte Oberflächen, auf die dann die Folien verlegt werden. Auf den Folien können dann in gleicher Weise weitere Lagen der Steine verlegt und verdichtet werden.

Das erfindungsgemäße Verfahren erlaubt die sofortige Befahrbarkeit der jeweils verlegten Steine, so daß es zu keinen Verzögerungen kommt. Der Aufbau der Seitenflächen mit Hilfe der Steine aus Ton ist ebenfalls sehr viel leichter, einfacher und sicherer als bei der herkömmlichen Methode. Selbstverständlich können auch beim erfindungsgemäßen Verfahren Kunststoffvliese (Geotextil) mit eingebaut werden, um die Deponieabdichtung zusätzlich zu stabilisieren.

Insbesondere, wenn die Seitenflächen der Steine aufgerauht sind, erfolgt bei der mechanischen Verdichtung der lagenweise eingebauten Steine eine rasche und sichere Verklebung der jeweils aneinander grenzenden Seitenflächen der Steine. Es entsteht somit in einfacher Weise eine geschlossene Tonschicht, die allen Anforderungen gerecht wird. Die so enstehende Tonschicht weist aufgrund der Einbauweise auch überall eine garantierte Mindestdicke auf, so daß es sogar möglich ist, die Schichtdicke insgesamt zu reduzieren und dadurch Tonmaterial einzusparen, ohne die Sicherheit der Deponieabdichtung zu gefährden.

Durch die Möglichkeit den Ton mit anderen Tonarten oder Klärschlammverbrennungsasche zu verschneiden, ist es zusätzlich möglich, die Eigenschaften der Tonschicht zu optimieren. Beim Vermischen des Tones mit Klärschlammverbrennungsasche wird darüber hinaus ein bisher wenig brauchbares Abfallprodukt sinnvoll verwertet.

Die Herstellung der Steine kann in meist schon vorhandenen Strangpressen für Schamottesteine oder Ziegelsteine erfolgen, so daß hierfür keine Investitionen nötig sind. Gewünschtenfalls können aber auch auf die vorhandenen Strangpressen andere Mundstücke gesetzt werden, so daß jede gewünschte Dimension der Steine leicht herstellbar ist.

Auch das Aufsetzen der Steine auf Paletten und Überziehen mit einer Schrumpffolie kann mit den herkömmlichen und meist schon vorhandenen Geräten erfolgen. Das Verlegen der Steine von den Paletten aus kann wiederum erfolgen durch herkömmliche Pflasterverlegemaschinen, die die Steine von der Palette abheben und verlegen. Es ist dadurch möglich, rasch große Flächen der Tonschicht herzustellen.

Gegenstand der vorliegenden Erfindung sind nicht nur das Verfahren zur Herstellung von Deponieabdichtungen, sondern auch die Deponieabdichtung selbst, die dadurch gekennzeichnet ist, daß die Tonschichten aus fein aufgeschlossenen gegebenenfalls mit anderen Tonarten oder Klärschlammverbrennungsasche verschnittenen, lagenweise eingebauten und mechanisch verdichteten, an den Seitenflächen miteinander verklebten Steinen bestehen, die wegen des geringen Wassergehaltes zu geringer Trockenschwindung, und damit geringer Rissbildung führen. Die Formkörper können durch Zusatz anderer Stoffe zu einer Matrix mit möglichst geringer Trockenschwindung geformt werden.

## Patentansprüche

1. Deponieabdichtung bestehend aus mindestens zwei Schichten Ton und mindestens einer eingelagerten Folie, dadurch gekennzeichnet, daß die Tonschichten aus fein aufgeschlossenen, gegebenenfalls mit anderen Tonarten oder Klärschlammverbrennungsasche verschnittenen, lagenweise eingebauten und mechanisch verdichteten, an den Seitenflächen miteinander verklebten Steinen bestehen, die im Steifverpressungsverfahren hergestellt wurden.

2. Deponieabdichtung gemäß Anspruch 1, dadurch gekennzeichnet, daß die Steine die Abmessungen 30 x 15 x 15 cm oder 24 x 11,5 x 11,5 cm aufweisen.

3. Deponieabdichtung gemäß Anspruch 1 oder 2, dadurch gekennzeichnet, daß die Seitenflächen der Steine aufgerauht waren.

4. Verfahren zur Herstellung von Deponieabdichtung bestehend aus mindestens zwei Schichten Ton und mindestens einer eingelagerteten Folie, dadurch gekennzeichnet, daß der Ton fein aufgeschlossen, gegebenenfalls mit anderen Tonarten oder Klärschlammverbrennungsasche verschnitten, zu Steinen verpresst, lagenweise eingebaut, mechanisch so verdichtet wird, daß die aneinander angrenzenden Seitenflächen der Steine miteinander verkleben, wobei nach jeweils einer oder mehreren Lagen der Steine auf die geglättete und miteinander verklebte Oberfläche die Folie verlegt wird, woraufhin mindestens eine weitere Lage der Steine verlegt und verdichtet wird.

5. Verfahren gemäß Anspruch 4, dadurch gekennzeichnet, daß Steine die Abmessungen 30 x 15 x 15 cm oder 24 x 11,5 x 11,5 cm aufweisen.

6. Verfahren gemäß einem der Ansprüche 4 oder 5, dadurch gekennzeichnet, daß die Seitenflächen der Steine aufgerauht werden.

7. Verfahren gemäß einem der Ansprüche 4 bis 6, dadurch gekennzeichnet, daß die Steine auf Paletten zwischengelagert und durch Schrumpffolien vor Austrocknung und externer Befeuchtung geschützt werden.

8. Verfahren gemäß Anspruch 7, dadurch gekennzeichnet, daß die Steine von den Paletten durch Pflasterverlegemaschinen abgehoben und verlegt werden.

9. Verfahren gemäß einem der Ansprüche 4 bis 8, dadurch gekennzeichnet, daß die mechanische Verdichtung durch Gewicht und/oder Rütteln erfolgt.
